# EUROPEAN PATENT APPLICATION

(11) **EP 4 765 786 A1**
(43) Date of publication of application: **24.06.2026**
(21) Application number: 24909773.4
(22) Date of filing: 05.08.2024
(51) Int. Cl.: H04M 1/02

(54) **SCREEN ASSEMBLY AND DISPLAY DEVICE**

(30) Priority: 29.12.2023 CN 202311871872
(71) Applicant: Honor Device Co., Ltd., Shenzhen, Guangdong 518040 (CN)
(72) Inventor: GUO, Renwei, Shenzhen, Guangdong 518040 (CN)
(74) Representative: Henselmann, Alexander Gerhard
(86) International application number: PCT/CN2024/109916
(87) International publication number: WO 2025/138819

(57) **Abstract**

This application provides a screen assembly and a display device, relates to the field of display technologies, and can reduce a possibility of generating black speckles or impressions on a screen. The screen assembly includes a screen and a camera decoration member. The screen is provided with at least one through hole. The camera decoration member includes an external decoration member, an internal decoration member, and at least one force-releasing boss. An external decoration member body is located on a display side of the screen, and an internal decoration member body is located on a back side of the screen. The at least one force-releasing boss is accommodated in the at least one through hole. The at least one force-releasing boss is disposed on the internal decoration member body, and a distance between the at least one force-releasing boss and the external decoration member body is a second distance; or the at least one force-releasing boss is disposed on the external decoration member body, and a distance between the at least one force-releasing boss and the internal decoration member body is a second distance, and the second distance is less than the first distance, so that in a process in which the camera decoration member moves toward the screen under an external force impact, before the camera decoration member is in contact with the screen, the decoration member can be prevented from impacting the screen through force releasing by using the force-releasing boss.

## Description

This application claims priority to Chinese Patent Application No. 202311871872.0, entitled "ANTENNA AND ELECTRONIC DEVICE" and filed with the China National Intellectual Property Administration on December 29, 2023, which is incorporated herein by reference in its entirety.

### TECHNICAL FIELD

This application relates to the field of display technologies, and in particular, to a screen assembly and a display device.

### BACKGROUND

A display device like a mobile phone or a tablet computer usually implements a display function by using a screen, and a screen side may be provided with a camera, to shoot an image on a front side of the screen by using the screen-side camera.

On screens of some display devices, a camera decoration member needs to be disposed, to protect and decorate the screen-side camera. In addition, with a gradual increase of functions of the screen-side camera, a height of the camera gradually increases, and the camera decoration member is usually disposed protruding outward from the screen. In this way, when being collided with by an external force, the camera decoration member easily transmits the external force to the screen, causing problems such as black speckles or impressions generated on the screen.

### SUMMARY

This application provides a screen assembly and a display device, to reduce a possibility of generating black speckles or impressions on a screen.

To achieve the foregoing objective, the following technical solutions are used in embodiments of this application.

According to a first aspect, a screen assembly is provided. The screen assembly includes a screen and a camera decoration member.

The screen has a display side and a back side. The display side is a side of the screen for displaying a video or an image, and the back side faces away from the display side. The screen is provided with at least one through hole communicating the display side and the back side. "At least one" means one or more.

The camera decoration member includes an external decoration member, an internal decoration member, and at least one force-releasing boss. At least a part of the external decoration member is located on the display side of the screen, the part of the external decoration member located on the display side is an external decoration member body, and a distance between the external decoration member body and the screen is a first distance.

At least a part of the internal decoration member is located on the back side of the screen, and the part of the internal decoration member located on the back side is an internal decoration member body. The at least one boss is located between the external decoration member body and the internal decoration member body, and the at least one force-releasing boss is accommodated in the at least one through hole.

The at least one force-releasing boss is disposed on the internal decoration member body, and a distance between the at least one force-releasing boss and the external decoration member body is a second distance. Alternatively, the at least one force-releasing boss is disposed on the external decoration member body, and a distance between the at least one force-releasing boss and the internal decoration member body is a second distance. The second distance is less than the first distance.

In this way, when an external force acts on the camera decoration member, the external decoration member moves toward the screen, and before coming into contact with the screen, the external decoration member comes into contact with the at least one force-releasing boss of the internal decoration member, or comes into contact with the internal decoration member body by using the at least one force-releasing boss, to release at least a part of the external force from the at least one force-releasing boss to the internal decoration member, and further release the at least a part of the external force by using the internal decoration member. Therefore, the internal decoration member and the screen share an impact force from the external decoration member, so that the impact force from the external decoration member to the screen can be reduced, and a possibility of generating black speckles or impressions on the screen is reduced. A portion on which the force-releasing boss is located is a first force-releasing portion.

Optionally, a difference between the first distance and the second distance is greater than or equal to 0.05 mm. Optionally, the difference between the first distance and the second distance may be 0.05 mm, 0.08 mm, 0.1 mm, 0.15 mm, 0.18 mm, or 0.2 mm. When the difference falls within this range, a height by which the force-releasing boss protrudes from a display surface is great, so that the external decoration member can be effectively prevented from impacting the screen under an action of the external force. The display surface refers to a surface of the screen that faces the display side, and the display surface includes a display region corresponding to pixels inside the screen and a non-display region corresponding to an internal lead region.

Optionally, the screen is further provided with a first mounting hole communicating the display side and the back side. The external decoration member and the internal decoration member are connected by using the first mounting hole. To be specific, the external decoration member is connected to the internal decoration member, and a part of the external decoration member that is configured to be connected to the internal decoration member and/or a part of the internal decoration member that is configured to be connected to the external decoration member is accommodated in the first mounting hole. In addition, the external decoration member and the internal decoration member respectively limit the screen from the display side and the back side, so that the camera decoration member can be connected to the screen. This structure is simple and easily implemented.

In addition, a connection portion that is between the external decoration member and the internal decoration member and that is in the first mounting hole forms a second force-releasing portion. When the external force acts on the camera decoration member, the external decoration member not only can transmit a part of component force of the external force from the first force-releasing portion to the internal decoration member, but also can transmit another part of component force of the external force from the second force-releasing portion to the internal decoration member, to increase the external force released to the internal decoration member and reduce the impact force from the external decoration member to the screen, thereby further reducing a possibility of generating black speckles or impressions on the screen.

Based on the foregoing descriptions, optionally, the at least one through hole is located on an outer circumferential side of the first mounting hole. The outer circumferential side of the first mounting hole refers to a side that is of an inner wall surface of the first mounting hole and that faces away from a central axis of the first mounting hole. In this way, the first through hole does not overlap the first mounting hole, and the first force-releasing portion does not overlap the second force-releasing portion. A part of the impact force received by the external decoration member may be released to the internal decoration member from two different positions, namely, the first force-releasing portion and the second force-releasing portion, which can improve force releasing efficiency.

Optionally, the internal decoration member includes a first connecting boss. The first connecting boss is accommodated in the first mounting hole, and the at least a part of the external decoration member is connected to the first connecting boss. In this way, the first connecting boss forms the part of the internal decoration member that is configured to be connected to the external decoration member. The external decoration member does not need to be provided with a boss. Therefore, a profile is simple, and processing difficulty of the external decoration member can be reduced.

Optionally, the external decoration member includes a second connecting boss, the second connecting boss is accommodated in the first mounting hole, and the second connecting boss is connected to the internal decoration member body. In this way, the second connecting boss forms the part of the external decoration member that is configured to be connected to the internal decoration member. The internal decoration member does not need to be provided with a boss. Therefore, a profile is simple, and processing difficulty of the internal decoration member can be reduced.

Optionally, the internal decoration member includes the first connecting boss, the external decoration member includes the second connecting boss, both the first connecting boss and the second connecting boss are accommodated in the first mounting hole, and the first connecting boss is connected to the second connecting boss. In this way, the first connecting boss forms the part of the internal decoration member that is configured to be connected to the external decoration member, and the second connecting boss forms the part of the external decoration member that is configured to be connected to the internal decoration member. Disposing heights of the first connecting boss and the second connecting boss are small. During assembly, both the first connecting boss and the second connecting boss may cooperate with the first mounting hole, to limit the external decoration member and the internal decoration member and ensure assembly precision.

Optionally, a quantity of through holes in the at least one through hole is two, and the two through holes are symmetrically distributed relative to a central axis of the first mounting hole. A quantity of force-releasing bosses in the at least one force-releasing boss is also two, and the two force-releasing bosses are respectively accommodated in the two through holes. In this way, a small quantity of set through holes can reduce a hole opening area on the screen and ensure structural strength of the screen. In addition, a quantity of first force-releasing portions is two, and the two first force-releasing portions are respectively located at two opposite sides of the second force-releasing portion, so that stability of force releasing can be ensured.

Optionally, a quantity of through holes in the at least one through hole is three, and the three through holes are evenly distributed along a circumferential direction of the first mounting hole. The circumferential direction of the first mounting hole refers to a direction around the central axis of the first mounting hole. That the three through holes are evenly distributed along a circumferential direction of the first mounting hole refers to that, along the circumferential direction of the first mounting hole, a central angle between any two adjacent through holes relative to the central axis of the first mounting hole is approximately equal, and distances between the three through holes and the central axis of the first mounting hole are also approximately equal. A quantity of force-releasing bosses in the at least one force-releasing boss is also three, and the three force-releasing bosses are respectively accommodated in the three through holes. In this way, when the external force acts on the camera decoration member, the external decoration member can be stably supported by using the three force-releasing bosses, to prevent the external decoration member from being inclined when the external force is off-center, thereby preventing the external decoration member from impacting the screen as much as possible.

Optionally, the at least one through hole is spaced apart from the first mounting hole. In this way, the first force-releasing portion is spaced apart from the second force-releasing portion, so that concentration of the force-releasing portions can be avoided, and the external decoration member is prevented from being inclined under the external force, thereby preventing the external decoration member from impacting the screen.

Optionally, the at least one through hole is in communication with the first mounting hole. In this way, a distance between the at least one through hole and the first mounting hole can be designed to be short, so that areas of occupied regions of the through hole and the first mounting hole on the screen can be reduced, which is beneficial to reducing a size of the camera decoration member and increasing a screen-to-body ratio of the screen assembly.

Optionally, the screen is further provided with a second mounting hole communicating the display side and the back side, the second mounting hole is spaced apart from the first mounting hole, and the external decoration member and the internal decoration member are further connected by using the second mounting hole. In this way, a connection portion that is between the external decoration member and the internal decoration member and that is in the second mounting hole is a third force-releasing portion. When the external force acts on the camera decoration member, the external decoration member may further transmit a part of component force of the external force from the third force-releasing portion to the internal decoration member. The third force-releasing portion cooperates with the first force-releasing portion and the second force-releasing portion to release more external force to the internal decoration member, to further reduce the impact force from the external decoration member to the screen, thereby further reducing a possibility of generating black speckles or impressions on the screen.

Based on the foregoing descriptions, optionally, the at least one through hole is located between the first mounting hole and the second mounting hole. Through cooperation between the first force-releasing portion and the second force-releasing portion and the third force-releasing portion in the at least one through hole, the impact force released from the external decoration member to the screen can be effectively reduced, and a through hole does not need to be additionally provided at another position, which is beneficial to reducing an area of an opening region on the screen and reducing the size of the camera decoration member.

Optionally, a plane passing through a central axis of the first mounting hole and a central axis of the second mounting hole is a reference plane. Based on this, a quantity of through holes in the at least one through hole is one, the through hole is a long hole, and a length direction of the long hole is perpendicular to the reference plane. A cross-sectional shape of the force-releasing boss is a long strip, the force-releasing boss is accommodated in the long hole, and a length direction of a cross section of the force-releasing boss is consistent with the length direction of the long hole. In this way, when the external force acts on the camera decoration member, a support range of the force-releasing boss for the external decoration member is large, so that force-releasing efficiency can be improved.

Optionally, the screen includes a light-transmitting cover plate and a display module that are disposed in a stacked manner. The at least one through hole is provided on the light-transmitting cover plate. The display module is provided with a first avoidance hole, the first avoidance hole is at least opposite to and in communication with the at least one through hole, and the internal decoration member body is accommodated in the first avoidance hole. In this way, the internal decoration member body is disposed in the first avoidance hole, to avoid a height by which the internal decoration member body protrudes from the back side is excessively high, affecting structural compactness of the entire display device is affected.

Optionally, the camera decoration member further includes a first adhesive layer. The first adhesive layer includes, but is not limited to, a back adhesive or a dispensing adhesive. The first adhesive layer is adhered between the external decoration member body and the screen. The first adhesive layer adheres the external decoration member to the screen, which can improve connection stability of the camera decoration member on the screen.

Optionally, the camera decoration member further includes a second adhesive layer, and the second adhesive layer is adhered between the external decoration member body and the first connecting boss. In this way, the external decoration member and the internal decoration member do not need to be punched, and structural strength and integrity can be ensured.

Further, the first adhesive layer may be ring-shaped, and the first mounting hole and the at least one through hole are located in a region surrounded by the first adhesive layer. In this way, the first adhesive layer performs a waterproof sealing function, and can prevent moisture outside the display device from entering the through hole or the first mounting hole from a gap between the external decoration member body and the screen.

Optionally, the external decoration member is a metal member. A material of the external decoration member may be a stainless steel, an aluminum alloy, a copper alloy, a magnesium alloy, or a titanium alloy. Good texture of the metal can improve appearance performance of the display device, and high stiffness of the metal can improve deformation resistance of the external decoration member.

Optionally, the internal decoration member is a plastic member. A material of the internal decoration member may be PC, PC+glass fiber, or ABS plastic. The plastic can form a complex profile by using an integral injection process, which has low forming difficulty. In addition, costs and a density of the plastic material are low, which can reduce costs and a weight of the internal decoration member.

According to a second aspect, a screen assembly is further provided. The screen assembly includes a screen and a camera decoration member.

The screen has a display side and a back side. The display side is a side of the screen for displaying a video or an image, and the back side faces away from the display side. The screen is provided with a first mounting hole communicating the display side and the back side.

The camera decoration member includes an external decoration member and an internal decoration member, and the external decoration member and the internal decoration member are connected by using the first mounting hole.

At least a part of the external decoration member is located on the display side of the screen, the part of the external decoration member located on the display side is an external decoration member body, and the external decoration member body is connected to a display surface of the screen. At least a part of the internal decoration member is located on the back side of the screen, the part of the internal decoration member located on the back side is an internal decoration member body, and the internal decoration member body is connected to a back surface of the screen.

In this way, when an external force acts on the camera decoration member, the external decoration member moves toward the screen, a part of the external force is released from the display surface to the screen, and the other part of the external force is released from the back surface to the screen, so that the external force can be shared by using the display surface and the back surface of the screen, thereby avoiding concentration of stress, and reducing a possibility of generating black speckles or impressions on the screen.

Optionally, a first adhesive layer may be disposed between the external decoration member body and the display surface of the screen, and the external decoration member body is adhered to the display surface of the screen by using the first adhesive layer. In this way, neither the external decoration member body nor the screen needs to be additionally provided with an opening, so that structural strength can be ensured.

Optionally, a fourth adhesive layer may be disposed between the internal decoration member body and the back surface of the screen. The fourth adhesive layer includes, but is not limited to, a back adhesive or a dispensing adhesive. The internal decoration member body is adhered to the back surface of the screen by using the fourth adhesive layer. In this way, neither the screen nor the internal decoration member needs to be additionally provided with an opening, so that structural strength can be ensured.

Optionally, the screen includes a light-transmitting cover plate and a display module that are disposed in a stacked manner. The first mounting hole is provided on the light-transmitting cover plate; and the display module is provided with a second avoidance hole, the second avoidance hole is opposite to and in communication with the first mounting hole, an area of the second avoidance hole is greater than an area of the first mounting hole, and a surface region of the light-transmitting cover plate that faces the second avoidance hole forms a partial region of the back surface of the screen. The internal decoration member body is accommodated in the second avoidance hole and is connected to the surface region of the light-transmitting cover plate that faces the second avoidance hole.

In this way, the external force is shared by using a display surface and a back surface of the light-transmitting cover plate, so that concentration of stress can be avoided, and the display module can be prevented from being damaged. In addition, the internal decoration member body is disposed in the second avoidance hole, to avoid that a height of the internal decoration member body protruding from the back side is excessively high, and consequently, structural compactness of the entire display device is affected.

Optionally, the screen includes a light-transmitting cover plate and a display module that are disposed in a stacked manner. A surface of the display module that faces away from the light-transmitting cover plate forms at least a partial region of the back surface of the screen; and the at least a part of the internal decoration member is located on a side of the display module that faces away from the light-transmitting cover plate, and is connected to the surface of the display module that faces away from the light-transmitting cover plate. In this way, the external force is shared by using the light-transmitting cover plate and the display module, so that concentration of stress is avoided, and a possibility of generating black speckles or impressions on the screen is reduced. In addition, an area of the internal decoration member body may be designed to be large, and an area of a connecting region to the display module may also be designed to be large, so that the external force shared by the display module can be increased.

According to a third aspect, a display device is further provided. The display device includes the screen assembly according to any technical solution of the first aspect and a force-bearing member. The force-bearing member is located on the back side of the screen, the force-bearing member is further located on a side of the internal decoration member that faces away from the external decoration member, and a surface of the internal decoration member that faces away from the external decoration member is in contact with the force-bearing member, or a distance between the internal decoration member and the force-bearing member is less than the difference between the first distance and the second distance.

In this way, when an external force acts on the external decoration member, the external decoration member transmits a part of the external force to the internal decoration member, and further transmits the external force to the force-bearing member through the decoration member. Finally, the force-bearing member bears the external force, to avoid releasing all of the external force to the screen.

Optionally, the display device further includes a middle frame. The middle frame includes a middle plate and a frame disposed at an edge of the middle plate, the middle plate forms the force-bearing member, and an edge of the screen is fixed to the frame. In this way, the external force is finally released to the middle frame, and the middle frame has large structural strength and a strong force-bearing capability, so that impact resistance performance of an entire display device can be improved.

According to a fourth aspect, a display device is further provided. The display device includes a housing, the screen assembly according to any technical solution of the second aspect, and a screen-side camera. The screen assembly is connected to the housing, the screen-side camera is disposed in the housing, and a light incident end of the screen-side camera faces the camera decoration member of the screen assembly.

The display device provided in this application includes the screen assembly according to any technical solution of the second aspect. Therefore, the screen assembly can solve the same problem and achieve the same effect.

### BRIEF DESCRIPTION OF DRAWINGS

FIG. 1 is a three-dimensional view of a display device in an unfolded state according to some embodiments of this application;
FIG. 2 is a three-dimensional view of the display device shown in FIG. 1 in a half-folded state;
FIG. 3 is a three-dimensional view of the display device in FIG. 1 in a folded state;
FIG. 4 is a top view of the display device shown in FIG. 3 in a folded state;
FIG. 5 is a schematic cross-sectional structural view of a partial structure of the display device shown in FIG. 4 along a direction A-A;
FIG. 6 is a top view of a display device in a folded state according to some other embodiments of this application;
FIG. 7 is a partial schematic cross-sectional structural view of the display device shown in FIG. 6 along a direction B-B;
FIG. 8 is a top view of the display device shown in FIG. 6 after a camera decoration member is hidden;
FIG. 9 is a top view of the display device shown in FIG. 6 after an external decoration member is hidden;
FIG. 10 is a three-dimensional cross-sectional view of an internal decoration member in the display device shown in FIG. 7;
FIG. 11 is a three-dimensional cross-sectional view of an assembled structure of the internal decoration member shown in FIG. 10 and a screen;
FIG. 12 is a cross-sectional view of an assembled structure of an external decoration member and an internal decoration member in the display device shown in FIG. 7;
FIG. 13 is a cross-sectional view of an assembled structure of an external decoration member and an internal decoration member in a display device according to some other embodiments of this application;
FIG. 14 is a schematic cross-sectional structural view of a display apparatus according to some other embodiments of this application;
FIG. 15 is a schematic cross-sectional structural view of a display apparatus according to some other embodiments of this application;
FIG. 16 is a top view of a display device after an external decoration member is hidden according to some other embodiments of this application;
FIG. 17 is a top view of a display device after an external decoration member is hidden according to some other embodiments of this application;
FIG. 18 is a top view of a display device after an external decoration member is hidden according to some other embodiments of this application;
FIG. 19 is a schematic cross-sectional structural view of a display device according to some other embodiments of this application;
FIG. 20 is a schematic cross-sectional structural view of a display device according to some other embodiments of this application; and
FIG. 21 is a schematic cross-sectional structural view of a display device according to some other embodiments of this application.

Reference Numerals:
100-Display device;
10-Inward-foldable screen;
20-Screen assembly; 21-Screen; a-Through hole; A-First mounting hole; B-Second mounting hole; 22-Camera decoration member; 221- External decoration member; 222-Internal decoration member; 223-Force-releasing boss; 221a-External decoration member body; 221b-Second connecting boss; 222a-Internal decoration member body; 222b-First connecting boss; 224-light-transmitting member; 225-First adhesive layer; N1-First light passing hole; N2-Second light passing hole; 226-Second adhesive layer; 227-Third adhesive layer; 228-Fourth adhesive layer; 212a-First avoidance hole; 212b-Second avoidance hole;
30-Housing; 31-First housing; 32-Second housing; 33-Rotating shaft mechanism; 311-Middle frame;
40-Screen-side camera; and
50-Force-bearing member.

### DESCRIPTION OF EMBODIMENTS

In embodiments of this application, terms "first", "second", "third", and "fourth" are used merely for a purpose of description, and shall not be construed as indicating or implying relative importance or implying a quantity of indicated technical features. Therefore, a feature defined by "first", "second", "third", or "fourth" may explicitly or implicitly include one or more such features.

In embodiments of this application, terms "comprise", "include", or any other variants thereof are intended to encompass non-exclusive inclusion, so that a process, a method, an article, or an apparatus including a series of elements not only includes those elements, but also includes another element not listed explicitly, or further includes intrinsic elements of the process, the method, the article, or the apparatus. Without more restrictions, the elements defined by the sentence "including a..." do not exclude the existence of other identical elements in the process, method, article, or apparatus including the elements.

"And/or" in embodiments of this application describes only an association relationship of associated objects and represents that three relationships may exist. For example, A and/or B may represent: Only A exists, both A and B exist, and only B exists. In addition, a character "/" in this specification generally indicates an "or" relationship between the associated objects.

This application provides a display device. The display device includes a screen, to have a display function. A screen side is further provided with a camera, and the screen-side camera is configured to implement a function of shooting an image on a front side of the screen. The screen is further provided with a camera decoration member, and the camera decoration member is configured to decorate and protect the screen-side camera.

The display device may be a user equipment (user equipment, UE), a terminal (terminal) device, or the like. For example, the display device may be a mobile terminal or a fixed terminal, like a portable android device (portable android device, PAD), a notebook computer, a watch, a personal digital assistant (personal digital assistant, PDA), a handheld device having a wireless communication function, a computing device, an in-vehicle device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), or a wireless terminal in a smart home (smart home). This application is described by using an example in which the display device is a vertical foldable screen device. The vertical foldable screen device may be, for example, a handheld device having a wireless communication function, and the handheld device may be, for example, a mobile phone.

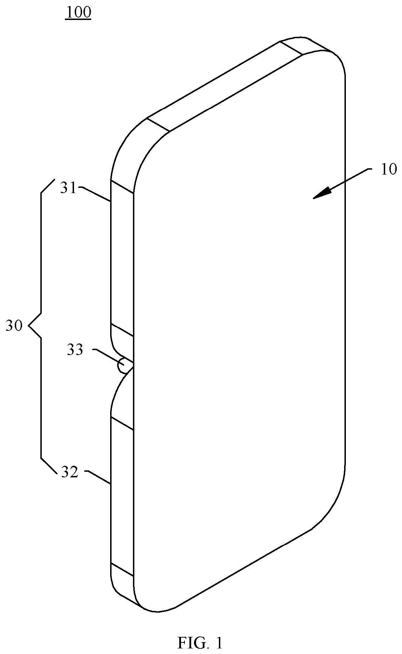

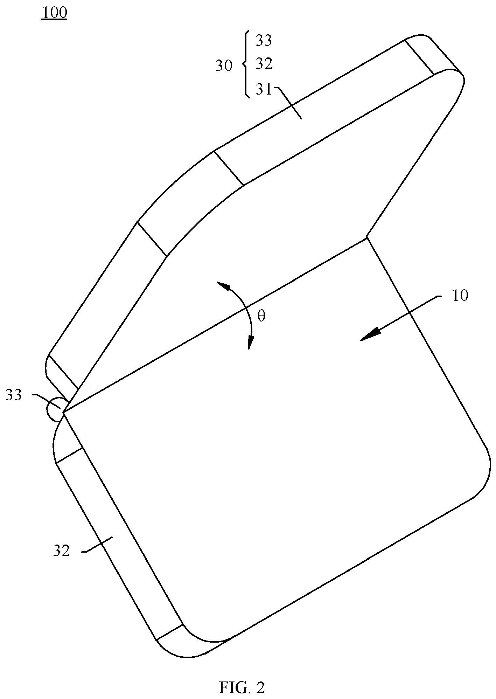

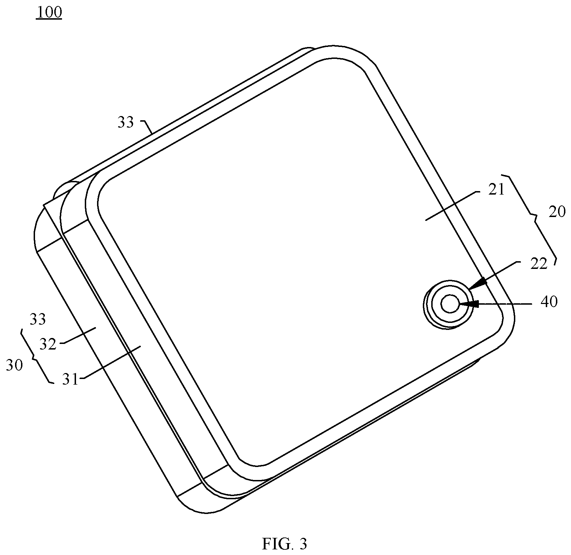

Referring to FIG. 1 to FIG. 3, FIG. 1 is a three-dimensional view of a display device 100 in an unfolded state according to some embodiments of this application, FIG. 2 is a three-dimensional view of the display device 100 shown in FIG. 1 in a half-folded state, and FIG. 3 is a three-dimensional view of the display device 100 in FIG. 1 in a folded state.

The display device 100 includes an inward-foldable screen 10, a screen assembly 20, a housing 30, and a screen-side camera 40.

The inward-foldable screen 10 is configured to implement a large-screen display function. The inward-foldable screen 10 may be a flexible screen. Specifically, the inward-foldable screen 10 may be an organic light-emitting diode (organic light-emitting diode, OLED) screen, a micro organic light-emitting diode (micro organic light-emitting diode) screen, or a quantum dot light emitting diode (quantum dot light emitting diode, QLED) screen.

The screen assembly 20 includes a screen 21, and the screen 21 is an outer screen and is configured to implement small-screen display. The screen 21 may be a hard screen. Specifically, the screen 21 may be a liquid crystal display (liquid crystal display, LCD).

The housing 30 is configured to support the inward-foldable screen 10 and the screen 21, and allows the display device 100 to switch between a folded state and an unfolded state.

The housing 30 includes a first housing 31, a second housing 32, and a rotating shaft mechanism 33. A part of the inward-foldable screen 10 is supported on the first housing 31, and the other part of the inward-foldable screen 10 is supported on the second housing 32. The screen 21 is disposed on a side of the first housing 31 that faces away from the inward-foldable screen 10. The rotating shaft mechanism 33 is connected between the first housing 31 and the second housing 32, and is configured to enable relative rotation between the first housing 31 and the second housing 32, to change an angle θ that is between a part of an inner screen on the first housing 31 and a part of an inner screen on the second housing 32 and that is on a display side of the inward-foldable screen 10, thereby implementing switching between the folded state and the unfolded state.

In some embodiments, when the angle θ is approximately equal to 180°, the inward-foldable screen 10 and even the display device 100 are in the unfolded state, and large-screen display may be implemented by using the inward-foldable screen 10, to bring a richer visual effect to a user. When the angle θ is approximately equal to 0°, the inward-foldable screen 10 and even the display device 100 are in the folded state, the housing 30 protects the inward-foldable screen 10, to prevent the inward-foldable screen 10 from being polluted or scratched. In addition, the display device 100 has a small size and is convenient to carry. In this state, the screen 21 is exposed, and small-screen display can be implemented by using the screen 21. When the angle θ is of an angle value ranging from 0° to 180°, the inward-foldable screen 10 and even the display device 100 are in a half-folded state.

The screen-side camera 40 is disposed in the first housing 31, and a light incident end of the screen-side camera 40 faces a display side of the screen 21. The display side of the screen 21 refers to a side of the screen 21 that displays a video or an image. The user may watch, from the display side, the video or the image displayed on the screen 21. The light incident end of the screen-side camera 40 refers to an end that faces a shot image when the screen-side camera 40 shoots an image. Light reflected by the shot image may enter the screen-side camera 40 through the light incident end.

In this way, when the display device 100 is in the unfolded state and performs display by using the inward-foldable screen 10, referring to FIG. 1, the screen-side camera 40 is used as a rear camera of the display device 100. When the display device 100 is in the folded state and performs display by using the screen 21, referring to FIG. 3, the screen-side camera 40 is used as a front camera of the display device 100.

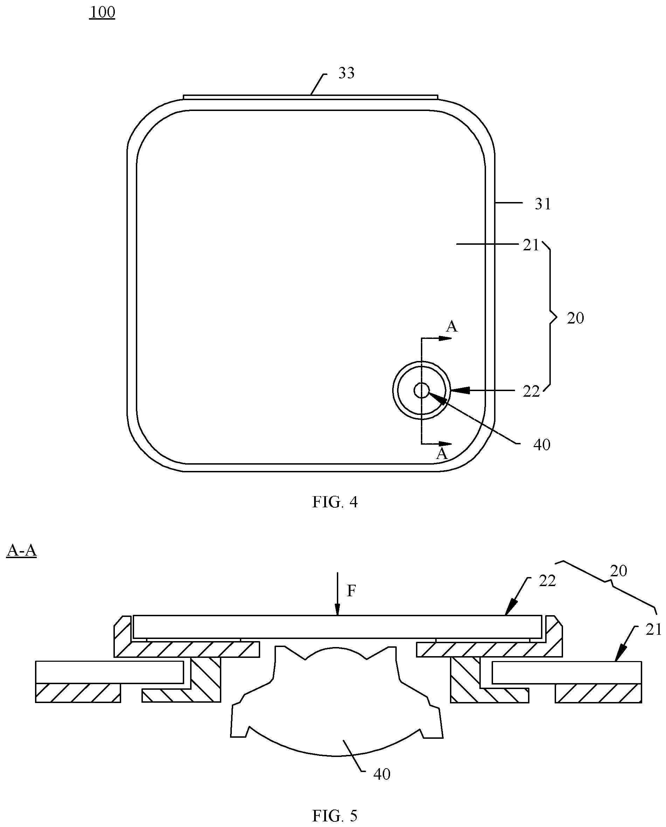

Based on the foregoing descriptions, referring to FIG. 4 and FIG. 5, FIG. 4 is a top view of the display device 100 shown in FIG. 3 in a folded state, and FIG. 5 is a schematic cross-sectional structural view of a partial structure of the display device 100 shown in FIG. 4 along a direction A-A. The screen assembly 20 further includes a camera decoration member 22. The camera decoration member 22 is disposed on the screen 21 and is configured to decorate and protect the screen-side camera 40.

As the user has a higher requirement on shooting quality of the screen-side camera 40, a quantity of components integrated in the screen-side camera 40 also increases, for example, at least one of an auto-focus component, an anti-wobble component, or a variable aperture component is integrated. In this way, a height of the screen-side camera 40 along a direction of an optical axis O is large. Based on this, to protect the screen-side camera 40, referring to FIG. 4 and FIG. 5, the camera decoration member 22 may be disposed protruding from the display side of the screen 21, to not affect lightness of the display device 100, thereby ensuring carrying convenience and a touch feeling of the display device 100.

However, because the camera decoration member 22 is disposed protruding from the display side of the screen 21, in scenarios such as carrying, falling, and transportation of the display device 100, the camera decoration member 22 is prone to be impacted by an external force F. When the external force is transmitted from the camera decoration member 22 to the screen 21, the screen 21 is prone to have problems such as black speckles or impressions due to low impact resistance.

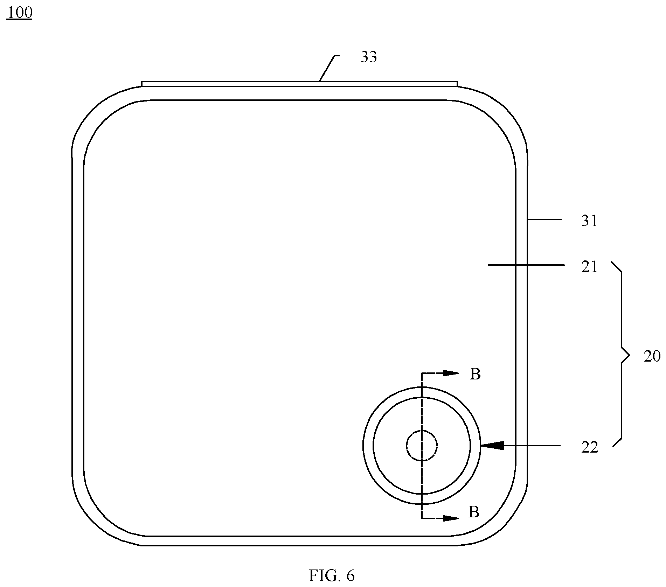

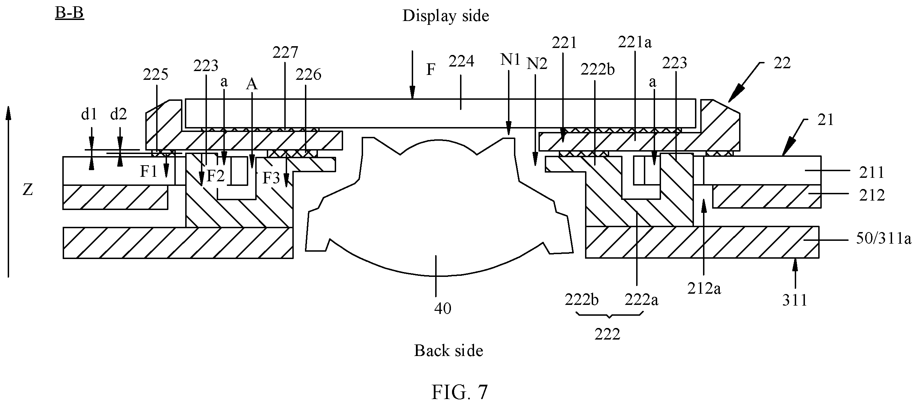

To resolve the foregoing problems, referring to FIG. 6 and FIG. 7, FIG. 6 is a top view of a display device 100 in a folded state according to some other embodiments of this application, and FIG. 7 is a partial schematic cross-sectional structural view of the display device 100 shown in FIG. 6 along a direction B-B. In this embodiment, a screen assembly 20 includes a screen 21 and a camera decoration member 22 disposed on the screen 21.

The screen 21 has a display side and a back side. The display side of the screen 21 refers to a side of the screen 21 that displays a video or an image. A user may watch, from the display side, the video or the image displayed on the screen 21. The back side faces away from the display side.

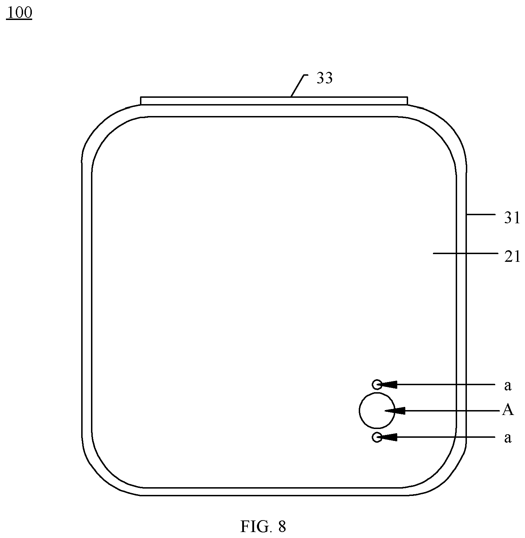

Referring to FIG. 7 and FIG. 8, FIG. 8 is a top view of the display device 100 shown in FIG. 6 after a camera decoration member 22 is hidden. The screen 21 is provided with at least one through hole a communicating the display side and the back side of the screen 21. In the figure, an example in which two through holes a are symmetrically distributed around a first mounting hole A is used, and this application does not specifically limit a quantity and positions of the through holes a. The through hole a may be, but is not limited to, a circular hole, a square hole, an elliptic hole, a polygonal hole, a triangular hole, or the like. For example, in this application, an example in which the through hole a is a circular hole is used for description.

Referring to FIG. 7, the camera decoration member 22 may include an external decoration member 221, an internal decoration member 222, and at least one force-releasing boss 223.

At least a part of the external decoration member 221 is located on the display side of the screen 21. To be specific, a part of the external decoration member 221 may be located on the display side of the screen 21, or the entire external decoration member 221 may be located on the display side of the screen 21. FIG. 7 is an exemplary description in which the entire external decoration member 221 is located on the display side of the screen 21. This should not be considered as a special limitation to this application.

Based on this, for ease of description below, a part of the external decoration member 221 that is located on the display side of the screen 21 is defined as an external decoration member body 221a, and the external decoration member body 221a further covers the at least one through hole a.

The external decoration member body 221a is spaced apart from the screen 21. To be specific, a distance between the external decoration member body 221a and the screen 21 is a first distance d1, and the first distance d1 is greater than 0. The distance between the external decoration member body 221a and the screen 21 is a distance that is between the external decoration member body 221a and the screen 21 and that is along a direction perpendicular to the screen 21 (that is, a Z-axis direction).

In some embodiments, a sealing structure or an adhesive structure may be disposed in a gap between the external decoration member body 221a and the screen 21. For example, referring to FIG. 7, a first adhesive layer 225 may be disposed in the gap between the external decoration member body 221a and the screen 21. The first adhesive layer 225 includes, but is not limited to, a back adhesive or a dispensing adhesive. The first adhesive layer 225 adheres the external decoration member 221 to the screen 21, to improve connection stability of the external decoration member 221 on the screen 21. In addition, the first adhesive layer 225 may further prevent moisture and dirt outside the display device from entering the inside of the display device along the gap, to achieve a waterproof sealing function.

When an external force F acts on the camera decoration member 22, the external decoration member 221 moves toward the screen 21 and presses the first adhesive layer 225, and a part (such as a component force F1) of the external force F may be transmitted to the screen 21, to impact the screen 21. A larger component force F1 indicates a larger damage degree to the screen 21, and a higher tendency to cause black speckles or impressions to be generated on the screen 21.

In another embodiment, a sealing structure, an adhesive structure, and other solid materials, pasty materials, and liquid materials may not be disposed in the gap between the external decoration member body 221a and the screen 21. In this way, when the external force F acts on the camera decoration member 22, before the external decoration member 221 moves to a position at which the external decoration member 221 comes into contact with the screen 21, the external decoration member 221 does not impact the screen 21.

At least a part of the internal decoration member 222 is located on the back side of the screen 21. To be specific, a part of the internal decoration member 222 may be located on the back side of the screen 21, or the entire internal decoration member 222 may be located on the back side of the screen 21. FIG. 7 is an exemplary description in which a part of the internal decoration member 222 is located on the back side of the screen 21. This should not be considered as a special limitation to this application.

Based on this, for ease of description below, a part of the internal decoration member 222 that is located on the back side of the screen 21 is defined as an internal decoration member body 222a, and the internal decoration member body 222a further covers the at least one through hole a.

In some embodiments, still referring to FIG. 7, the at least one force-releasing boss 223 is disposed on the internal decoration member body 222a. The at least one force-releasing boss 223 and the internal decoration member body 222a may be integrally formed, or may be respectively processed and assembled and connected through a connection manner like soldering, clamping, screwing, or the like. This is not specifically limited in this application.

The at least one force-releasing boss 223 is located between the external decoration member body 221a and the internal decoration member body 222a, and the at least one force-releasing boss 223 is accommodated in the at least one through hole a.

A distance between the at least one force-releasing boss 223 and the external decoration member body 221a is a second distance d2, and the second distance d2 is greater than or equal to 0 mm. The distance between the at least one force-releasing boss 223 and the external decoration member body 221a is a distance that is between the at least one force-releasing boss 223 and the external decoration member body 221a and that is along the Z-axis direction.

The second distance d2 is less than the first distance d1. In other words, the at least one force-releasing boss 223 is disposed protruding from a display surface of the screen 21, or the at least one force-releasing boss 223 extends into the gap between the screen 21 and the external decoration member body 221a. The display surface of the screen 21 refers to a surface of the screen 21 that faces the display side, and the display surface includes a display region corresponding to pixels inside the screen 21 and a non-display region corresponding to an internal lead region.

In this way, referring to FIG. 7, when the external force F acts on the camera decoration member 22, the external decoration member 221 moves toward the screen 21, and comes into contact with the at least one force-releasing boss 223 of the internal decoration member 222 before the external decoration member 221 comes into contact with the screen 21, to release at least a part (for example, a component force F2) of the external force F from the at least one force-releasing boss 223 to the internal decoration member 222, and further release the component force F2 to the outside by using the internal decoration member 222. Therefore, by sharing an impact force from the external decoration member 221 by using the internal decoration member 222 and the screen 21, the impact force F1 from the external decoration member 221 to the screen 21 can be reduced, and a possibility of generating black speckles or impressions on the screen is reduced. A portion on which the force-releasing boss 223 is located is a first force-releasing portion.

In the foregoing embodiment, still referring to FIG. 7, a difference d (d=d1-d2) between the first distance d1 and the second distance d2 is a height by which the force-releasing boss 223 protrudes from the display surface of the screen 21. The external decoration member 221 may generate slight vibration under impact of the external force F. To prevent the external decoration member 221 from impacting the screen 21 in a vibration process, the force-releasing boss 223 needs to protrude from the display surface by a safe distance.

Based on this, in some embodiments, the difference d may be greater than or equal to 0.05 mm. Optionally, the difference d may be 0.05 mm, 0.08 mm, 0.1 mm, 0.15 mm, 0.18 mm, or 0.2 mm. When the difference d falls within this range, the height by which the force-releasing boss 223 protrudes from the display surface is large, so that the external decoration member 221 can be effectively prevented from impacting the screen 21 under an action of the external force F.

There may be one or more through holes a in the at least one through hole a. Correspondingly, there may be one or more force-releasing bosses 223 in the at least one force-releasing boss 223. One force-releasing boss 223 may be accommodated in one through hole a, or two or more force-releasing bosses 223 may be accommodated in one through hole a. This is not specifically limited in this application.

For example, referring to FIG. 7, FIG. 8, and FIG. 9, FIG. 9 is a top view of the display device 100 shown in FIG. 6 after an external decoration member 221 is hidden. There are two through holes a in the at least one through hole a, and there are also two force-releasing bosses 223 in the at least one force-releasing boss 223. The two force-releasing bosses 223 are respectively accommodated in two through holes a, that is, one force-releasing boss 223 is disposed in one through hole a. A small quantity of set through holes a can reduce a hole opening area on the screen 21 and ensure structural strength of the screen 21.

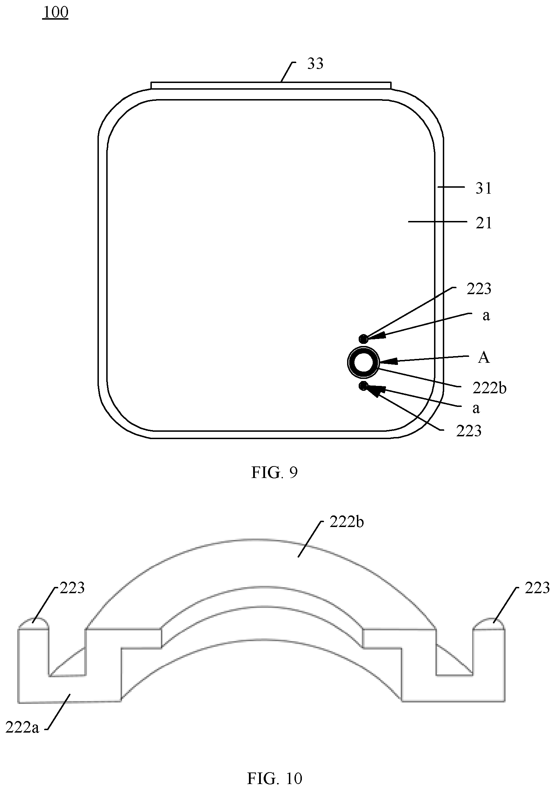

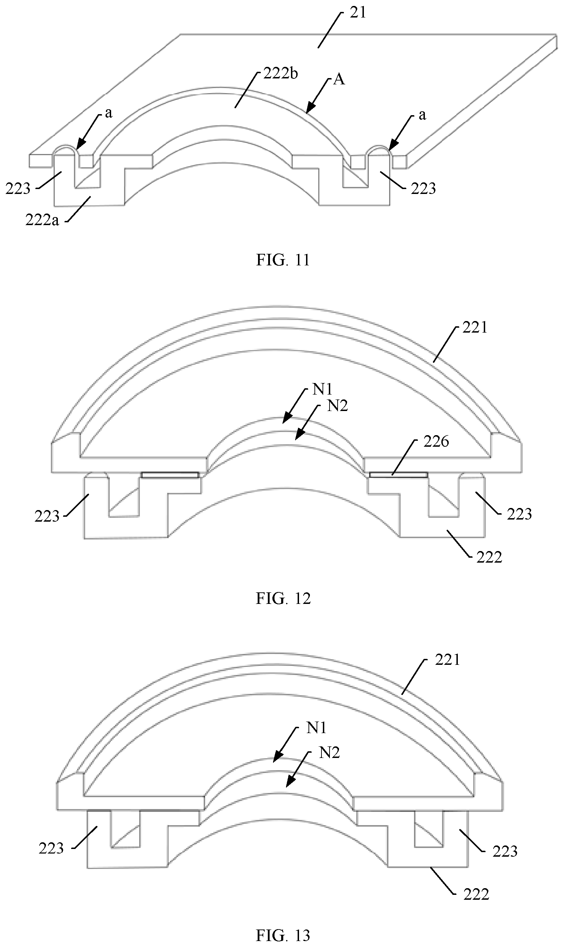

In some embodiments, referring to FIG. 10 and FIG. 11, FIG. 10 is a three-dimensional cross-sectional view of an internal decoration member 222 in the display device 100 shown in FIG. 7, and FIG. 11 is a three-dimensional cross-sectional view of an assembled structure of the internal decoration member 222 shown in FIG. 10 and a screen 21. A cross-sectional shape and a cross-sectional area of each part of the force-releasing boss 223 arranged along the Z-axis direction may be the same, and the cross-sectional area of each part of the force-releasing boss 223 arranged along the Z-axis direction may be less than an area of the through hole a. Cross sections of the force-releasing boss 223 and each part of the force-releasing boss 223 are cross sections of the force-releasing boss 223 and each part of the force-releasing boss 223 that are parallel to the display surface.

In this way, under the action of the external force F, the external decoration member 221 impacts the force-releasing boss 223, and causes the force-releasing boss 223 to move along an axial direction of the through hole a without impacting an inner wall of the through hole a, thereby further reducing a possibility of generating black speckles or impressions on the screen 21.

In some embodiments, still referring to FIG. 7, the screen 21 includes a light-transmitting cover plate 211 and a display module 212 that are disposed in a stacked manner. A material of the light-transmitting cover plate 211 includes, but is not limited to, glass, a sapphire, polycarbonate (polycarbonate, PC), a composite material of PC and glass fiber, ABS plastic (acrylonitrile butadiene styrene plastic), polymethyl methacrylate (PMMA), or a composite material of PC and PMMA. The display module 212 may include layer structures such as a display panel, a back film, a support layer, and a polarization layer. The display side is located on a side of the light-transmitting cover plate 211 that faces away from the display module 212, and the back side is located on a side of the display module 212 that faces away from the light-transmitting cover plate 211.

Based on this, optionally, referring to FIG. 7, the at least one through hole a may be provided on the light-transmitting cover plate 211, the display module 212 is provided with a first avoidance hole 212a, the first avoidance hole 212a is at least opposite to and in communication with the at least one through hole a, and the internal decoration member body 222a may be accommodated in the first avoidance hole 212a.

In this way, the internal decoration member body 222a is disposed in the first avoidance hole 212a, to avoid a height by which the internal decoration member body 222a protrudes from the back side from being excessively high, and consequently, affecting structural compactness of the entire display device.

In some embodiments, referring back to FIG. 7 to FIG. 9, the screen 21 may further be provided with a first mounting hole A communicating the display side and the back side, and the first mounting hole A is configured to accommodate the screen-side camera 40. A shape of the first mounting hole A includes, but is not limited to, a circle, a square, an ellipse, a polygon, a triangle, a rhombus, or the like. This application is described by using an example in which the shape of the first mounting hole A is a circle.

The external decoration member 221 and the internal decoration member 222 are connected at least by using the first mounting hole A. To be specific, the external decoration member 221 is connected to the internal decoration member 222, and a part of the external decoration member 221 that is configured to be connected to the internal decoration member 222 and/or a part of the internal decoration member 222 that is configured to be connected to the external decoration member 222 are/is accommodated in the first mounting hole A.

For example, referring to FIG. 7, FIG. 9, and FIG. 11, the internal decoration member 222 may include a first connecting boss 222b disposed on the internal decoration member 222. The first connecting boss 222b is accommodated in the first mounting hole A. The external decoration member body 221a is connected to the first connecting boss 222b.

In this way, the first connecting boss 222b forms the part of the internal decoration member 222 that is configured to be connected to the external decoration member 222. The external decoration member 221 does not need to be provided with a boss. Therefore, a profile is simple, and processing difficulty of the external decoration member 221 can be reduced.

In the foregoing example, still referring to FIG. 7 and FIG. 12, FIG. 12 is a cross-sectional view of an assembled structure of an external decoration member 221 and an internal decoration member 222 in the display device 100 shown in FIG. 7. A second adhesive layer 226 may be disposed between the external decoration member body 221a and the first connecting boss 222b. The second adhesive layer 226 includes, but is not limited to, a back adhesive or a dispensing adhesive. The external decoration member body 221a is adhered to the first connecting boss 222b by using the second adhesive layer 226. In this way, the external decoration member 221 and the internal decoration member 222 do not need to be punched, and structural strength and integrity can be ensured.

In another embodiment, the external decoration member body 221a and the first connecting boss 222b may alternatively be connected by using a connection member like a threaded connection member or a clamping member, or may be connected by using an integral forming manner, or may be fixedly connected by using a process like soldering or pressing. For example, referring to FIG. 13, FIG. 13 is a cross-sectional view of an assembled structure of an external decoration member 221 and an internal decoration member 222 in a display device 100 according to some other embodiments of this application. In this embodiment, the external decoration member 221 and the internal decoration member 222 are fixedly connected by using a process like soldering or pressing.

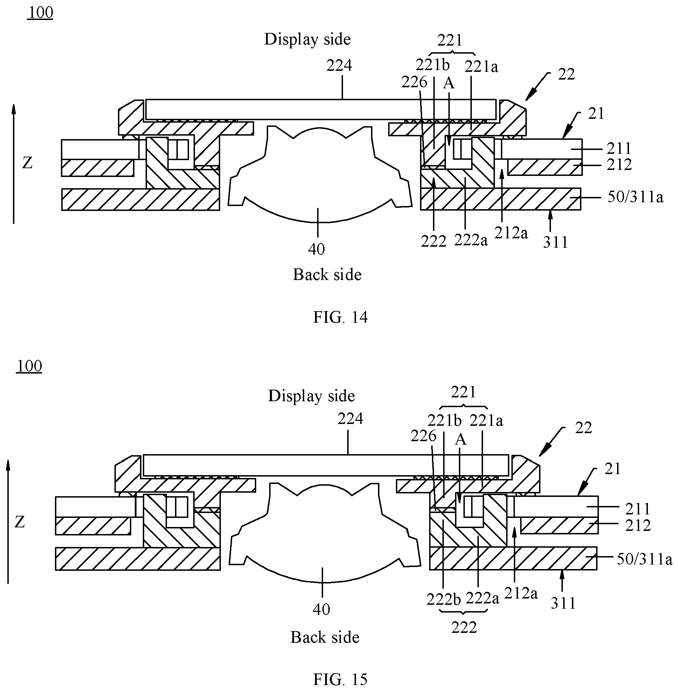

In some other examples, referring to FIG. 14, FIG. 14 is a schematic cross-sectional structural view of a display device 100 according to some other embodiments of this application. The external decoration member 221 includes a second connecting boss 221b, the second connecting boss 221b is accommodated in the first mounting hole A, and the second connecting boss 221b is connected to the internal decoration member body 222a.

In this way, the second connecting boss 221b forms the part of the external decoration member 221 that is configured to be connected to the internal decoration member 222. The internal decoration member 222 does not need to be provided with a boss. Therefore, a profile is simple, and processing difficulty of the internal decoration member 222 can be reduced.

In the foregoing embodiment, the second connecting boss 221b and the internal decoration member 222 may be adhered and fixed by using the second adhesive layer 226, may be connected by using a connection member like a threaded connection member or a clamping member, or may be integrally formed into one member. This is not specifically limited in this application.

In still some other examples, referring to FIG. 15, FIG. 15 is a schematic cross-sectional structural view of a display device 100 according to some other embodiments of this application. The internal decoration member 222 includes the first connecting boss 222b, the external decoration member 221 includes the second connecting boss 221b, both the first connecting boss 222b and the second connecting boss 221b are accommodated in the first mounting hole A, and the first connecting boss 222b is connected to the second connecting boss 221b.

In this way, the first connecting boss 222b forms the part of the internal decoration member 222 that is configured to be connected to the external decoration member 222, and the second connecting boss 221b forms the part of the external decoration member 221 that is configured to be connected to the internal decoration member 222. Disposing heights of the first connecting boss 222b and the second connecting boss 221b are small. During assembly, both the first connecting boss 222b and the second connecting boss 221b may cooperate with the first mounting hole A, to limit the external decoration member 221 and the internal decoration member 222 and ensure assembly precision.

Similarly, in the foregoing embodiment, the first connecting boss 222b and the second connecting boss 221b may be adhered and fixed by using the second adhesive layer 226, may be connected by using a structure like a threaded connection member or a clamping member, or may be integrally formed into one member. This is not specifically limited in this application.

The external decoration member 221 and the internal decoration member 222 are connected through the first mounting hole A, and the external decoration member 221 and the internal decoration member 222 respectively limit the screen 21 from the display side and the back side, thereby connecting the camera decoration member 22 to the screen 21. This structure is simple and easily implemented.

In addition, a connection portion that is between the external decoration member 221 and the internal decoration member 222 and that is in the first mounting hole A forms a second force-releasing portion. When the external force F acts on the camera decoration member 22, referring to FIG. 7, the external decoration member 221 not only can transmit a part of component force (that is, the component force F2) of the external force F from the first force-releasing portion to the internal decoration member 222, but also can transmit a part of component force (for example, a component force F3) of the external force F from the second force-releasing portion to the internal decoration member 222, to increase the external force F released to the internal decoration member 222 and reduce the impact force F1 released from the external decoration member 221 to the screen 21, thereby further reducing a possibility of generating black speckles or impressions on the screen 21.

In another embodiment, the external decoration member 221 and the internal decoration member 222 may alternatively be respectively located on the display side and the back side of the screen 21, and are connected by using a threaded connection member or a clamping member that extends through the screen 21. This is not specifically limited in this application.

For ease of description, the following embodiments are further described based on that the internal decoration member 222 shown in FIG. 7 includes the first connecting boss 222b, and the external decoration member body 221a is connected to the first connecting boss 222b. Definitely, the following embodiments may also be combined with the embodiment shown in FIG. 14 or FIG. 15. This is not specifically limited in this application.

Based on any one of the foregoing embodiments, referring back to FIG. 7, the external decoration member 221 is provided with a first light passing hole N1, the internal decoration member 222 is provided with a second light passing hole N2, and the first light passing hole N1 is opposite to and in communication with the second light passing hole N2.

Based on this, the camera decoration member 22 further includes a light-transmitting member 224. The light-transmitting member 224 is disposed on a side of the external decoration member 221 that faces away from the internal decoration member 222, and the light-transmitting member 224 covers the first light passing hole N1. The light incident end of the screen-side camera 40 faces the second light passing hole N2, or is accommodated in the first light passing hole N1 and the second light passing hole N2.

An image light beam outside the display device 100 may pass through the light-transmitting member 224 and be emitted into the screen-side camera 40.

A material of the light-transmitting member 224 includes, but is not limited to, glass, sapphire, polycarbonate (polycarbonate, PC), a composite material of PC and glass fiber, ABS plastic (acrylonitrile butadiene styrene plastic), polymethyl methacrylate (PMMA), or a composite material of PC and PMMA. This is not specifically limited in this application.

In some embodiments, referring to FIG. 7, a third adhesive layer 227 may be disposed between the light-transmitting member 224 and the external decoration member 221. The third adhesive layer 227 includes, but is not limited to, a dispensing adhesive or a back adhesive. The light-transmitting member 224 is adhered to the external decoration member 221 by using the third adhesive layer 227. In some embodiments, the third adhesive layer 227 may be circularly distributed, and the first light passing hole N1 is located in a region surrounded by the third adhesive layer 227.

In this way, the third adhesive layer 227 may prevent moisture outside the display device 100 from entering the first light passing hole N1 along a gap between the light-transmitting member 224 and the external decoration member 221, thereby implementing a waterproof sealing function.

In some embodiments, referring to FIG. 7 and FIG. 8, the at least one through hole a may be located on an outer circumferential side of the first mounting hole A. The outer circumferential side of the first mounting hole A refers to a side of an inner wall surface of the first mounting hole A that faces away from a central axis of the first mounting hole A.

In this way, the through hole a does not overlap the first mounting hole A, and the first force-releasing portion does not overlap the second force-releasing portion. A part of the impact force received by the external decoration member 222 may be released to the internal decoration member 222 from two different positions, namely, the first force-releasing portion and the second force-releasing portion, which can improve force releasing efficiency.

Definitely, in another embodiment, the at least one through hole a may alternatively coincide with the first mounting hole A. In other words, the at least one through hole a and the first mounting hole A are the same through hole. In this way, an occupied area of the camera decoration member 22 on the screen 21 can be designed to be small, and a size of the camera decoration member 22 can be designed to be small.

The following embodiments are further described based on that the at least one through hole a is located on the outer circumferential side of the first mounting hole A.

Referring to FIG. 8, two through holes a are located on the outer circumferential side of the first mounting hole A, and the two through holes a are symmetrically distributed relative to the central axis of the first mounting hole A. In this way, there are two first force-releasing portions, and the two first force-releasing portions are respectively located on two opposite sides of the second force-releasing portion, so that stability of force releasing can be ensured.

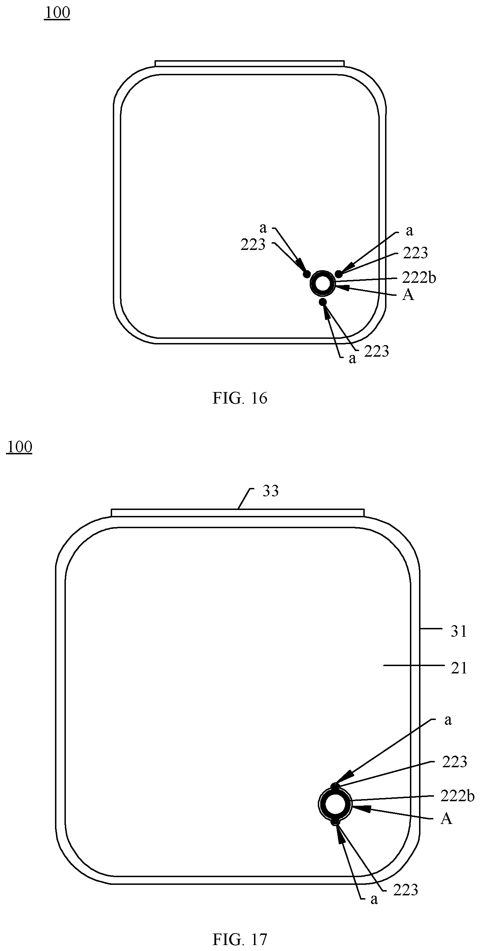

In some other embodiments, referring to FIG. 16, FIG. 16 is a top view of a display device 100 after an external decoration member 221 is hidden according to some other embodiments of this application. In this embodiment, there are three through holes a in the at least one through hole a, and the three through holes a are evenly distributed along a circumferential direction of the first mounting hole A. The circumferential direction of the first mounting hole A refers to a direction around the central axis of the first mounting hole A. That the three through holes a are evenly distributed along a circumferential direction of the first mounting hole A refers to that, along the circumferential direction of the first mounting hole A, central angles between any two adjacent through holes a of the three through holes a relative to the central axis of the first mounting hole A are approximately equal, and distances between the three through holes a and the central axis of the first mounting hole A are also approximately equal.

Based on this, there are also three force-releasing bosses 223 in the at least one force-releasing boss 223, and the three force-releasing bosses 223 are respectively accommodated in the three through holes a.

In this way, when the external force F acts on the camera decoration member 22, the external decoration member 221 can be stably supported by using the three force-releasing bosses 223, to prevent the external decoration member 221 from being inclined when the external force F is eccentric, thereby preventing the external decoration member 221 from impacting the screen 21 as much as possible.

Definitely, in another embodiment, the three through holes a may alternatively be unevenly distributed along the circumferential direction of the first mounting hole A. In other words, the central angles between any two adjacent through holes a of the three through holes a relative to the central axis of the first mounting hole A are not equal along the circumferential direction of the first mounting hole A, and/or the distances between the three through holes a and the central axis of the first mounting hole A are not equal.

In some embodiments, referring to FIG. 8 and FIG. 16, the at least one through hole a may be spaced apart from the first mounting hole A. In this way, the first force-releasing portion is spaced apart from the second force-releasing portion, so that concentration of the force-releasing portions can be avoided, and the external decoration member 221 is prevented from being inclined under an action of the external force, thereby preventing the external decoration member 221 from impacting the screen 21.

In some other embodiments, referring to FIG. 17, FIG. 17 is a top view of a display device 100 after an external decoration member 221 is hidden according to some other embodiments of this application. In this embodiment, the at least one through hole a is in communication with the first mounting hole A.

In this way, a distance between the at least one through hole a and the first mounting hole A can be designed to be short, so that areas of occupied regions of the at least one through hole a and the first mounting hole A on the screen 21 can be reduced, which is beneficial to reducing the size of the camera decoration member 22 and increasing a screen-to-body ratio of the screen assembly 20.

In some embodiments, referring back to FIG. 7, the first adhesive layer 225 may be ring-shaped, and the first mounting hole A and the at least one through hole a may be located in a region surrounded by the first adhesive layer 225.

In this way, waterproof sealing may be performed by using the first adhesive layer 225, to prevent moisture outside the display device 100 from entering the through hole a or the first mounting hole A from the gap between the external decoration member body 221a and the screen 21.

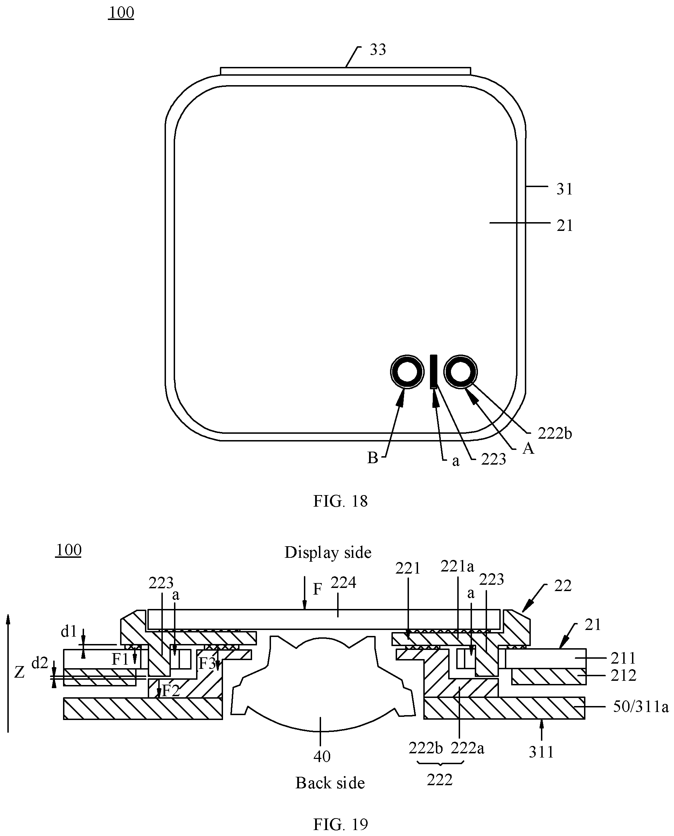

In some embodiments, referring to FIG. 18, FIG. 18 is a top view of a display device 100 after an external decoration member 221 is hidden according to some other embodiments of this application. In this embodiment, the screen 21 is further provided with a second mounting hole B communicating the display side and the back side, and the second mounting hole B is spaced apart from the first mounting hole A.

Based on this, the external decoration member 221 and the internal decoration member 222 are further connected by using the second mounting hole B. Optionally, for an implementation of connecting the external decoration member 221 and the internal decoration member 222 by using the second mounting hole B, refer to the foregoing implementation of connecting the external decoration member 221 and the internal decoration member 222 by using the first mounting hole A. Details are not described herein again.

In this way, a connection portion that is between the external decoration member 221 and the internal decoration member 222 and that is in the second mounting hole B is a third force-releasing portion. When the external force F acts on the camera decoration member 22, the external decoration member 221 may transmit a part of component force (for example, a component force F4) of the external force F from the third force-releasing portion to the internal decoration member 222. The third force-releasing portion cooperates with the first force-releasing portion and the second force-releasing portion to release more external force F to the internal decoration member 222, to further reduce the impact force released from the external decoration member 221 to the screen 21, thereby further reducing a possibility of generating black speckles or impressions on the screen 21.

Based on the foregoing descriptions, still referring to FIG. 18, the at least one through hole a is located between the first mounting hole A and the second mounting hole B. Through cooperation between the first force-releasing portion with the second force-releasing portion and the third force-releasing portion in the at least one through hole a, the impact force released from the external decoration member 221 to the screen 21 can be effectively reduced, and the through hole a does not need to be additionally provided at another position, which is beneficial to reducing an area of a hole opening region on the screen 21 and reducing the size of the camera decoration member 22.

In some embodiments, still referring to FIG. 18, a plane passing through the central axis of the first mounting hole A and a central axis of the second mounting hole B is defined as a reference plane. Based on this, there may be one through hole a in the at least one through hole a. The one through hole a is a long hole. The long hole refers to that a size in one direction is greater than a size in another direction, the one direction and the another direction are both parallel to the screen 21, and the one direction is perpendicular to the another direction. A direction with a larger size is a length direction of the long hole. Optionally, the length direction of the long hole may be perpendicular to the reference plane.

Based on the foregoing descriptions, a cross-sectional shape of the force-releasing boss 223 is a long strip, the force-releasing boss 223 is accommodated in the long hole, and a length direction of a cross section of the force-releasing boss 223 is consistent with the length direction of the long hole. In this way, when the external force F acts on the camera decoration member 22, a support range of the force-releasing boss 223 for the external decoration member 221 is large, so that force-releasing efficiency can be improved.

Based on any one of the foregoing embodiments, materials of the external decoration member 221 and the internal decoration member 222 may be metal like stainless steel, aluminum alloy, copper alloy, magic alloy, or titanic alloy, or may be plastic like polycarbonate (polycarbonate, PC), PC+glass fiber, or ABS plastic (acrylonitrile butadiene styrene plastic), or may be another material like ceramics.

In some embodiments, the external decoration member 221 is a metal member. Good texture of the metal can improve appearance performance of the display device 100, and high stiffness of the metal can improve deformation resistance of the external decoration member 221. The internal decoration member 222 is a plastic member. The plastic can form a complex profile by using an integral injection process, which has low forming difficulty. In addition, costs and a density of the plastic material are low, which can reduce costs and a weight of the internal decoration member 222.

To further release the external force transmitted to the internal decoration member 222, in some embodiments, referring back to FIG. 7, the display device 100 may further include a force-bearing member 50. A material of the force-bearing member 50 may be metal like stainless steel, aluminum alloy, or metallic alloy, or may be plastic like PC or mylar, or may be a material like ceramics. Based on this, a surface of the internal decoration member 222 that faces away from the external decoration member 221 may be in contact with the force-bearing member 50, or a distance between the internal decoration member 222 and the force-bearing member 50 is less than the difference between the first distance d1 and the second distance d2.

In this way, when the external force acts on the external decoration member 221, the external decoration member 221 transmits a part of the external force to the internal decoration member 222, and further transmits the external force to the force-bearing member 50 through the decoration member 222. Finally, the force-bearing member 50 bears the external force, to avoid releasing all of the external force to the screen 21.

Optionally, the force-bearing member 50 may be formed by a part of the first housing 31. For example, still referring to FIG. 7, the first housing 31 includes a middle frame 311, and the middle frame 311 is located between the inward-foldable screen 10 and the screen assembly 20. The middle frame 311 is used as a supporting "skeleton" of the display device 100. The middle frame 311 includes a middle plate 311a and a frame (not shown in the figure) disposed at an edge of the middle plate 311a. The middle plate 311a forms the force-bearing member 50. The inward-foldable screen 10 is located on a side of the middle plate 311a that faces away from the screen assembly 20, and is fixed to the middle plate 311a. The screen 21 of the screen assembly 20 is fixed to the frame. In this way, the external force is finally released to the middle frame 311, and the middle frame 311 has large structural strength and a strong force-bearing capability, so that impact resistance performance of the entire display device 100 can be improved.

Definitely, in another embodiment, the force-bearing member 50 may alternatively be independent of the first housing 31. For example, the force-bearing member 50 may be a pad disposed between the internal decoration member 222 and the middle frame 311. This is not specifically limited in this application.

An exemplary description is provided in the foregoing embodiments by using an example in which the force-releasing boss 223 is disposed on the internal decoration member body 222a. In another embodiment, the force-releasing boss 223 may alternatively be disposed on the external decoration member body 221a.

For example, referring to FIG. 19, FIG. 19 is a schematic cross-sectional structural view of a display device 100 according to some other embodiments of this application. In this embodiment, at least one force-releasing boss 223 is disposed on the external decoration member body 221a. The at least one force-releasing boss 223 and the external decoration member body 221a may be integrally formed, or may be respectively processed and assembled and connected through a connection manner like soldering, clamping, screwing, or the like. This is not specifically limited in this application.

A distance between the at least one force-releasing boss 223 and the internal decoration member body 222a is a second distance d2, and the second distance d2 is greater than or equal to 0 mm. The second distance d2 is less than the first distance d1.

In this way, referring to FIG. 19, when the external force F acts on the camera decoration member 22, the external decoration member 221 moves toward the screen 21, and before the external decoration member 221 comes into contact with the screen 21, the at least one force-releasing boss 223 comes into contact with the internal decoration member body 22a, to release at least a part (for example, the component force F2) of the external force F from the at least one force-releasing boss 223 to the internal decoration member 222, and further release the external force F by using the internal decoration member 222. Therefore, the internal decoration member 222 and the screen 21 are also used to share an impact force from the external decoration member 221, so that the impact force from the external decoration member 221 to the screen 21 can be reduced, and a possibility of generating black speckles or impressions on the screen 21 is reduced.

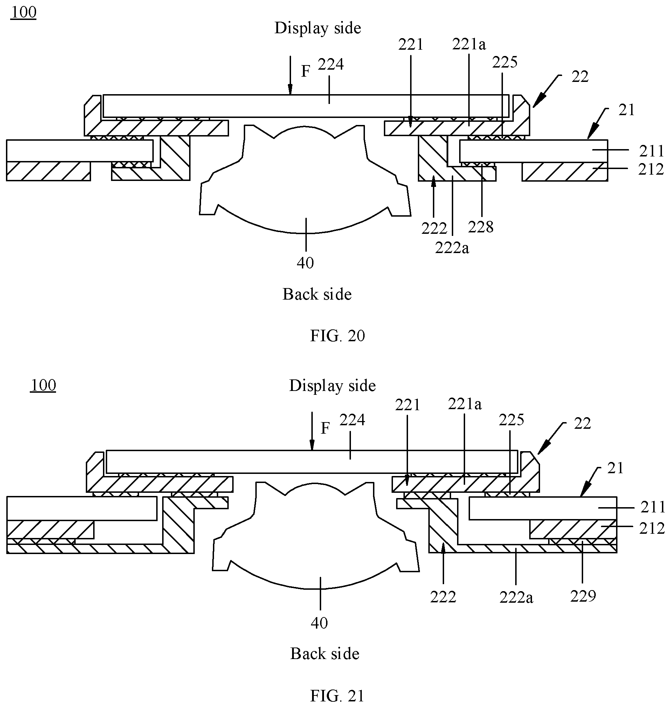

Referring to FIG. 20, FIG. 20 is a schematic cross-sectional structural view of a display device 100 according to some other embodiments of this application. In this embodiment, the screen 21 is provided with a first mounting hole A communicating the display side and the back side.

The camera decoration member 22 includes an external decoration member 221 and an internal decoration member 222.

At least a part of the external decoration member 221 is located on the display side of the screen 21. For ease of description below, the part of the external decoration member 221 that is located on the display side of the screen 21 is defined as an external decoration member body 221a.

At least a part of the internal decoration member 222 is located on the back side of the screen 21. For ease of description below, the part of the internal decoration member 222 that is located on the back side of the screen 21 is defined as an internal decoration member body 222a.

The external decoration member 221 and the internal decoration member 222 are connected by using the first mounting hole A. Optionally, an implementation of connecting the external decoration member 221 and the internal decoration member 222 by using the first mounting hole A may be the same as an implementation of connecting the external decoration member 221 and the internal decoration member 222 by using the first mounting hole A in any one of the foregoing embodiments, and details are not described herein again.

The external decoration member body 221a is connected to a display surface of the screen 21, and the display surface of the screen 21 refers to a surface of the screen 21 that faces the display side. Optionally, a first adhesive layer 225 may be disposed between the external decoration member body 221a and the display surface of the screen 21, and the external decoration member body 221a is adhered to the display surface of the screen 21 by using the first adhesive layer 225.

The internal decoration member body 222a is connected to a back surface of the screen 21, and the back surface of the screen 21 refers to a surface of the screen 21 that faces the back side. Optionally, a fourth adhesive layer 228 may be disposed between the internal decoration member body and the back surface of the screen 21. The fourth adhesive layer 228 includes, but is not limited to, a back adhesive or a dispensing adhesive. The internal decoration member body is adhered to the back surface of the screen 21 by using the fourth adhesive layer 228.

In this way, referring to FIG. 20, when the external force F acts on the camera decoration member 22, the external decoration member 221 moves toward the screen 21, a part (for example, a component force F1) of the external force F is released from the display surface to the screen 21, and the other part (for example, a component force F4) of the external force F is released from the back surface to the screen 21, so that the external force F can be shared by using the display surface and the back surface of the screen 21, thereby avoiding concentration of stress, and reducing a possibility of generating black speckles or impressions on the screen 21.

In some embodiments, referring to FIG. 20, the screen 21 includes a light-transmitting cover plate 211 and a display module 212 that are disposed in a stacked manner. The first mounting hole A is provided on the light-transmitting cover plate 211. The display module 212 may be provided with a second avoidance hole 212b. The second avoidance hole 212b is opposite to and in communication with the first mounting hole A, and an area of the second avoidance hole 212b is greater than an area of the first mounting hole A.

The area of the second avoidance hole 212b is a projection area of the second avoidance hole 212b on the light-transmitting cover plate 211, and the area of the first mounting hole A is an occupied area or a projection area of the first mounting hole A on the light-transmitting cover plate 211.

Based on the foregoing descriptions, a surface region of the light-transmitting cover plate 211 that faces the second avoidance hole 212b forms a partial region of the back surface of the screen 21. The internal decoration member body 222a may be accommodated in the second avoidance hole 212b, and the internal decoration member body 222a is connected to the surface region of the light-transmitting cover plate 211 that faces the second avoidance hole 212b.

The surface region of the light-transmitting cover plate 211 that faces the second avoidance hole 212b refers to a partial region that is in the surface of the light-transmitting cover plate 211 that faces the second avoidance hole 212b and that is located between an inner wall surface of the first mounting hole A and an inner wall surface of the second avoidance hole 212b.

In this way, the external force F is shared by using a display surface and a back surface of the light-transmitting cover plate 211, so that concentration of stress can be avoided, and the display module 212 can be prevented from being damaged. In addition, the internal decoration member body 222a is disposed in the second avoidance hole 212b, to avoid a height by which the internal decoration member body 222a protrudes from the back side from being excessively high, and consequently, affecting structural compactness of the entire display device.

In some other embodiments, referring to FIG. 21, FIG. 21 is a schematic cross-sectional structural view of a display device 100 according to some other embodiments of this application. In this embodiment, a surface of the display module 212 that faces away from the light-transmitting cover plate 211 forms at least a partial region of the back surface, the at least a part of the internal decoration member 222 is located on a side of the display module 212 that faces away from the light-transmitting cover plate 211, and the at least a part of the internal decoration member 222 is connected to the surface of the display module 212 that faces away from the light-transmitting cover plate 211.

In this way, the external force F is shared by using the light-transmitting cover plate 211 and the display module 212, so that concentration of stress is avoided, and a possibility of generating black speckles or impressions on the screen 21 is reduced. In addition, an area of the internal decoration member body 222a may be designed to be large, and an area of a connecting region to the display module 212 may also be designed to be large, so that the external force shared by the display module 212 can be increased.

In the descriptions of this specification, specific features, structures, materials, or characteristics may be combined in a proper manner in any one or more of the embodiments or examples.

Finally, it should be noted that, the foregoing embodiments are merely used for describing the technical solutions of this application, but are not intended to limit this application. Although this application is described in detail with reference to the foregoing embodiments, a person of ordinary skill in the art should understand that modifications can still be made to the technical solutions described in the foregoing embodiments, or equivalent substitutions can be made to some of the technical features. However, these modifications or substitutions do not make the essence of the corresponding technical solutions depart from the spirit and scope of the technical solutions in embodiments of this application.

## Claims

1. A screen assembly, comprising:
a screen, the screen having a display side and a back side opposite to the display side, and the screen being provided with at least one through hole communicating the display side and the back side; and
a camera decoration member, the camera decoration member comprising an external decoration member, an internal decoration member, and at least one force-releasing boss, wherein
at least a part of the external decoration member is located on the display side of the screen, and a distance between the at least a part of the external decoration member and the screen is a first distance;
at least a part of the internal decoration member is located on the back side of the screen;
the at least one force-releasing boss is located between the at least a part of the external decoration member and the at least a part of the internal decoration member, and the at least one force-releasing boss is accommodated in the at least one through hole;
the at least one force-releasing boss is disposed on the at least a part of the internal decoration member, and a distance between the at least one force-releasing boss and the at least a part of the external decoration member is a second distance; or the at least one force-releasing boss is disposed on the at least a part of the external decoration member, and a distance between the at least one force-releasing boss and the at least a part of the internal decoration member is a second distance; and the second distance is less than the first distance.

2. The screen assembly according to claim 1, wherein a difference between the first distance and the second distance is greater than or equal to 0.05 mm.

3. The screen assembly according to claim 1 or 2, wherein the screen is further provided with a first mounting hole communicating the display side and the back side;
the external decoration member and the internal decoration member are connected by using the first mounting hole; and the at least one through hole is located on an outer circumferential side of the first mounting hole.

4. The screen assembly according to claim 3, wherein the internal decoration member comprises a first connecting boss; and
the first connecting boss is accommodated in the first mounting hole, and the at least a part of the external decoration member is connected to the first connecting boss.

5. The screen assembly according to claim 3 or 4, wherein a quantity of through holes in the at least one through hole is two, and the two through holes are symmetrically distributed relative to a central axis of the first mounting hole; and
a quantity of force-releasing bosses in the at least one force-releasing boss is also two, and the two force-releasing bosses are respectively accommodated in the two through holes.

6. The screen assembly according to claim 3 or 4, wherein a quantity of through holes in the at least one through hole is three, and the three through holes are evenly distributed along a circumferential direction of the first mounting hole; and
a quantity of force-releasing bosses in the at least one force-releasing boss is also three, and the three force-releasing bosses are respectively accommodated in the three through holes.

7. The screen assembly according to any one of claims 3 to 6, wherein the at least one through hole is spaced apart from the first mounting hole.

8. The screen assembly according to any one of claims 3 to 6, wherein the at least one through hole is in communication with the first mounting hole.

9. The screen assembly according to claim 3 or 4, wherein the screen is further provided with a second mounting hole communicating the display side and the back side, and the second mounting hole is spaced apart from the first mounting hole; and
the external decoration member and the internal decoration member are further connected by using the second mounting hole, and the at least one through hole is located between the first mounting hole and the second mounting hole.

10. The screen assembly according to claim 9, wherein a plane passing through a central axis of the first mounting hole and a central axis of the second mounting hole is a reference plane; and
a quantity of through holes in the at least one through hole is one, the through hole is a long hole, and a length direction of the long hole is perpendicular to the reference plane.

11. The screen assembly according to any one of claims 1 to 10, wherein the screen comprises a light-transmitting cover plate and a display module that are disposed in a stacked manner;
the at least one through hole is provided on the light-transmitting cover plate; and
the display module is provided with a first avoidance hole, the first avoidance hole is at least opposite to and in communication with the at least one through hole, and the at least a part of the internal decoration member is accommodated in the first avoidance hole.

12. The screen assembly according to any one of claims 3 to 11, wherein the camera decoration member further comprises a first adhesive layer; and
the first adhesive layer is adhered between the at least a part of the external decoration member and the screen.

13. The screen assembly according to claim 4, wherein the camera decoration member further comprises a second adhesive layer, and the second adhesive layer is adhered between the at least a part of the external decoration member and the first connecting boss.

14. The screen assembly according to any one of claims 1 to 13, wherein the external decoration member is a metal member, and the internal decoration member is a plastic member.

15. A screen assembly, comprising:
a screen, the screen having a display side and a back side opposite to the display side, and the screen being provided with a first mounting hole communicating the display side and the back side; and
a camera decoration member, the camera decoration member comprising an external decoration member and an internal decoration member, wherein
the external decoration member and the internal decoration member are connected by using the first mounting hole; at least a part of the external decoration member is located on the display side of the screen and is connected to a display surface of the screen; and at least a part of the internal decoration member is located on the back side of the screen and is connected to a back surface of the screen.

16. The screen assembly according to claim 15, wherein the screen comprises a light-transmitting cover plate and a display module that are disposed in a stacked manner;
the first mounting hole is provided on the light-transmitting cover plate; the display module is provided with a second avoidance hole, the second avoidance hole is opposite to and in communication with the first mounting hole, an area of the second avoidance hole is greater than an area of the first mounting hole, and a surface region of the light-transmitting cover plate that faces the second avoidance hole forms a partial region of the back surface of the screen; and
the at least a part of the internal decoration member is accommodated in the second avoidance hole and is connected to the surface region of the light-transmitting cover plate that faces the second avoidance hole.

17. The screen assembly according to claim 16, wherein the screen comprises a light-transmitting cover plate and a display module that are disposed in a stacked manner;
a surface of the display module that faces away from the light-transmitting cover plate forms at least a partial region of the back surface of the screen; and the at least a part of the internal decoration member is located on a side of the display module that faces away from the light-transmitting cover plate, and is connected to the surface of the display module that faces away from the light-transmitting cover plate.

18. A display device, comprising:
a screen assembly, the screen assembly being the screen assembly according to any one of claims 1 to 14; and
a force-bearing member, the force-bearing member being located on the back side of the screen, the force-bearing member being further located on a side of the internal decoration member that faces away from the external decoration member, and a surface of the internal decoration member that faces away from the external decoration member being in contact with the force-bearing member, or a distance between the internal decoration member and the force-bearing member being less than the difference between the first distance and the second distance.

19. The display device according to claim 18, further comprising:
a middle frame, the middle frame comprising a middle plate and a frame disposed at an edge of the middle plate, the middle plate forming the force-bearing member, and an edge of the screen being fixed to the frame.

20. A display device, comprising:
a housing;
a screen assembly, the screen assembly being the screen assembly according to any one of claims 15 to 17, and the screen assembly being connected to the housing; and
a screen-side camera, the screen-side camera being disposed in the housing, and a light incident end of the screen-side camera facing the camera decoration member of the screen assembly.
